Europäisches Patentamt

European Patent Office

Office européen des brevets

(19)

(11) Veröffentlichungsnummer: **0 010 218**
**B1**

(12) # EUROPÄISCHE PATENTSCHRIFT

(45) Veröffentlichungstag der Patentschrift:
06.10.82

(51) Int. Cl.³: **C 09 C 1/56**, **H 01 M 4/62**,
**C 01 B 31/04**

(21) Anmeldenummer: 79103743.5

(22) Anmeldetag: 02.10.79

(54) Vorrichtung zur Erhöhung des Graphitierungsgrades von Russen sowie die Verwendung dieser Russe.

(30) Priorität: 25.10.78 DE 2846352

(43) Veröffentlichungstag der Anmeldung:
30.04.80 Patentblatt 80/9

(45) Bekanntmachung des Hinweises auf die Patenterteilung:
06.10.82 Patentblatt 82/40

(84) Benannte Vertragsstaaten:
AT BE CH DE FR GB IT NL SE

(56) Entgegenhaltungen:
DE-A-2 515 633
FR-A-875 388
GB-A-456 252
US-A-2 134 960
US-A-2 896 777
US-A-3 029 576
US-D-780 527
CHEMICAL ABSTRACTS, Vol. 68, Nr. 20, 1968,
Zusammenfassung Nr. 88 637a, Seite 8564, Spalte
2, Columbus, Ohio, USA, GUYL'MISARYAN et al.:
»Chlorination of carbon black«

(73) Patentinhaber: HOECHST AKTIENGESELLSCHAFT,
Postfach 80 03 20, D-6230 Frankfurt/Main 80 (DE)

(72) Erfinder: Dorn, Friedrich-Wilhelm, Dr., Giselherweg 3,
D-5030 Hürth-Hermülheim (DE)
Erfinder: Wolter, Manfred, Dr., Alleestrasse 48,
D-5030 Hürth-Knapsack (DE)
Erfinder: Heymer, Gero, Dr., Fasanenaue 12,
D-5042 Erftstadt (DE)

## Vorrichtung zur Erhöhung des Graphitierungsgrades von Rußen sowie die Verwendung dieser Ruße

Die vorliegende Erfindung betrifft eine Vorrichtung zur Erhöhung des Graphitierungsgrades von durch thermische Umwandlung von unter Normalbedingungen flüssigen oder gasförmigen Kohlenwasserstoffen gewonnenen Rußen durch Behandeln der Ruße in einer vertikal angeordneten Verweilzone bei Temperaturen von mindestens 1200°C im Gegenstrom zu Chlor oder Chlorwasserstoff und einem Inertgas, wobei die Vorrichtung aus einem vertikal angeordneten, isolierten Reaktionsrohr aus bei den Reaktionsbedingungen beständigem Material besteht, in das Elektroden zur direkten Erhitzung des nach unten bewegten Rußes eingebaut sind sowie die Verwendung dieser Ruße.

Als Maß für den Graphitierungsgrad eines Rußes kann man die mittlere Dicke seiner Bereiche mit Graphitstruktur ansetzen, welche mit Hilfe der Beziehung

$$L_c = \frac{0,89 \cdot \lambda}{B \cdot \cos \Theta}$$

($\lambda$ = Wellenlänge der monochromatischen Röntgenstrahlung, B = Halbwertsbreite des Reflexes im Bogenmaß, $\Theta$ = Lage des Reflexmaximums in Grad) aus dem [002]-Reflex eines Pulverdiffraktogrammes ermittelbar ist.

Aus der US-A-2 698 777 ist eine Vorrichtung zur Reinigung von kohlenstoffhaltigem Material mit Chlor bei hoher Temperatur bekannt, welche aus einem vertikal angeordnetem Stahlzylinder besteht, dessen Innenwandung mit feuerfestem Material ausgekleidet ist. Stahlzylinder und feuerfeste Auskleidung sind von mehreren, horizontal und starr angeordneten Elektroden durchdrungen, durch welche das nach unten bewegte Material direkt erhitzt wird. Stahlzylinder und feuerfeste Auskleidung sind weiterhin unten von einer Zuführungsleitung für Chlor durchdrungen. Schließlich weist die Vorrichtung an ihrem unteren Ende eine Auslaßkammer auf, aus welcher das gereinigte kohlenstoffhaltige Material durch eine Tür entnehmbar ist.

Nachteilig ist bei der bekannten Vorrichtung, daß die Verweilzeit des zu behandelnden kohlenstoffhaltigen Materials im stromdurchflossenen und damit beheizten Bereich des Apparates durch den Massenfluß bestimmt wird, d. h. die Eigenschaften des behandelten Materials sind vom Durchsatz abhängig. Weiterhin erlaubt die mit einer Tür verschlossene Auslaßkammer keinen kontinuierlichen Betrieb der Vorrichtung.

Es ist daher Aufgabe der vorliegenden Erfindung, eine für kontinuierlichen Betrieb geeignete Vorrichtung zur Erhöhung des Graphitierungsgrades von Rußen anzugeben, welche aus einem vertikal angeordneten, isolierten Reaktionsrohr besteht, in das Elektroden zur direkten Erhitzung des nach unten bewegten Rußes eingebaut sind. Erfindungsgemäß ist diese Vorrichtung gekennzeichnet durch eine in das Graphit-Rohr hineinreichende und in vertikaler Richtung verstellbare Graphit-Elektrode mit dem eigentlichen Graphit-Rohr als Gegenelektrode, mehrere im mittleren Bereich des Graphit-Rohres angebrachte Einmündungen für Chlor- oder Chlorwasserstoff-Gas und ein mit dem unteren Ende des Graphit-Rohres verbundenes, wassergekühltes Austragsorgan, in das die Zuführung für Stickstoff als Inertgas einmündet.

Schließlich können die in der Vorrichtung gemäß der Erfindung erhaltenen Ruße zum Einbau in Depolarisationsmassen von Trockenbatterien verwendet werden.

Durch die in vertikaler Richtung verstellbare Graphit-Elektrode ist bei der erfindungsgemäßen Vorrichtung die Verweilzeit des Rußes im Graphit-Rohr von seinem Durchsatz unabhängig.

Ruße, welche in der erfindungsgemäßen Vorrichtung behandelt werden, sind beispielsweise aus der DE-A-2 515 633 bekannt und weisen eine der empirischen Bewertung von Rußen dienende AS-Zahl von mehr als 15 auf. Es können aber auch auf andere Weise durch thermische Spaltung oder partielle Verbrennung von flüssigen oder gasförmigen Kohlenwasserstoffen erhaltene Ruße mit AS-Zahlen von 13 bis 20 in dieser Vorrichtung behandelt werden.

Dabei gibt die AS-Zahl («absorption stiffness») diejenige Menge eines Wasser-Aceton-Gemisches (9 : 1) in cm³ an, welche erforderlich ist, um in einem Rundkolben aus 5 g Ruß eine einzelne Kugel zu formen. Die AS-Zahl dient zur empirischen Bewertung von Rußen.

Durch die Behandlung in der erfindungsgemäßen Vorrichtung bei höheren Temperaturen werden die Ruße infolge der Erhöhung ihres Graphitierungsgrades gegenüber Oxidationsmitteln chemisch inerter, wodurch sie bei ihrer Verwendung in Trockenbatterien in geringerem Maße mit dem Braunstein reagieren, was in der Erhöhung der Entladeleistung der Trockenzellen seinen Niederschlag findet.

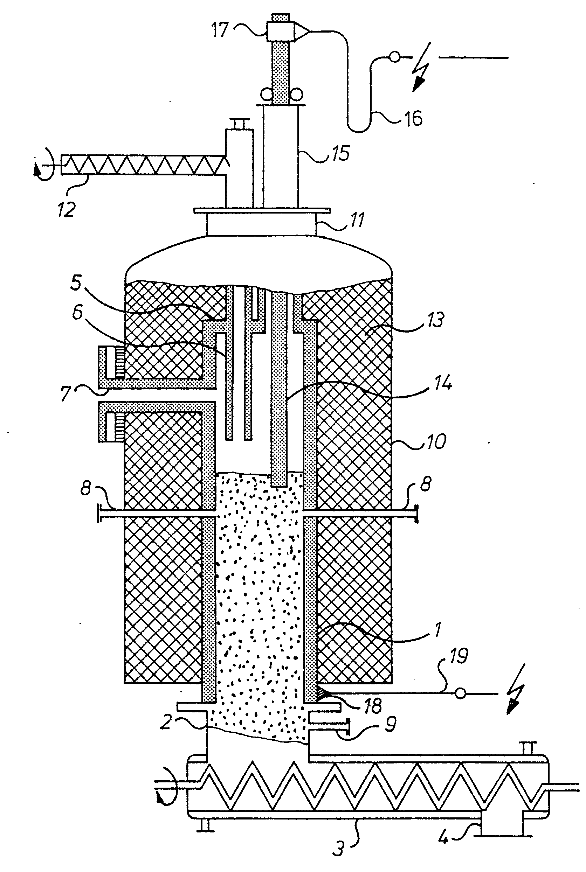

In der beigefügten Zeichnung ist ein Ausführungsbeispiel des Gegenstandes der Erfindung schematisch und teilweise im Schnitt dargestellt.

Ein zylindrisches Graphit-Rohr 1 ist mit seinem unteren Ende auf das Zuführungsrohr 2 eines wassergekühlten Austragsorgans 3 (Schnecke) aufgesetzt, dessen Austragsrohr 4 der Entnahme des behandelten Rußes dient. Das Graphit-Rohr 1 ist an seinem oberen Ende mit einem Deckel 5 verschlossen, welcher von einem Zuteilrohr 6 durchdrungen ist. Das Graphit-Rohr 1 ist in seinem oberen Bereich von einem Abgasrohr 7 und in seinem mittleren Bereich von Einmündungen 8 für Chlor- oder Chlorwasserstoff-Gas durchdrungen, während in das Zuführungsrohr 2 des Austragsorgans 3 eine Zuführung 9 für Stickstoff einmündet. Konzentrisch zum Graphit-Rohr 1 ist ein zylindrischer Stahlbehälter 10 angeordnet, dessen Boden von dem Graphit-Rohr 1 durchdrungen ist und dessen Deckel einen Stutzen 11 aufweist. Der Raum zwischen dem Graphit-Rohr 1 und dem Stahlbehälter 10 ist mit Isoliermaterial 13 ausgefüllt. Durch den Stutzen 11 ist das Zuteilrohr 6 hindurchgeführt, an welchem nahe seinem oberen Ende eine horizontal verlaufende Zuteilschnecke 12 angeordnet ist. Weiterhin ist der Stutzen 11 von einer Graphit-Elektrode 14 durchdrungen, welche innerhalb des Graphit-Rohres 1 endet und oberhalb des Stutzens 11 teilweise von einer Trag- und Verstelleinrichtung 15 konzentrisch umgeben ist. Die Graphit-Elektrode 14 trägt an ihrem oberen Ende eine mit einer flexiblen Stromzuführungsleitung 16 versehene kontaktbacke 17. Am unteren Ende des Graphit-Rohres 1 ist eine Kontaktbacke 18 angeordnet, von welcher eine Stromzuführungsleitung 19 abgeht.

Beispiel

Ein durch thermische Umwandlung von gasförmigen Kohlenwasserstoffen gemäß DE-A-2 515 633 gewonnener Ruß wurde zur Entfernung von anhaftenden Kohlenwasserstoffen und Wasser auf 650° C erhitzt, wonach er eine Restfeuchte von 0,5 Gew.-% aufwies. Dieser Ruß hatte eine AS-Zahl von 45 bis 55, eine BET-Oberfläche (vergl. J. Amer. Chem. Soc. 60 (1938) S. 309) von 1000 m²/g und eine mittlere Dicke der Bereiche mit Graphitstruktur von 25 bis 30 · 10⁻¹⁰ m.

Der Ruß wurde über die Dosiereinrichtung in die erfindungsgemäße Vorrichtung eingetragen, wobei der Durchmesser des Graphit-Rohres 70 cm betrug. Das Graphit-Rohr wurde über die Zuführung mit 500 l/h Stickstoff als Inertgas begast, während über die Einmündungen 500 l/h Chlorwasserstoff-Gas in das Graphit-Rohr eingeleitet wurde. Eintrag und Austrag des Rußes wurden so eingestellt, daß bei einem Durchsatz von etwa 10 kg/h seine Verweilzeit im Graphit-Rohr etwa 4 Stunden betrug. Im Graphit-Rohr wurde unter Regelung des den Ruß durchfließenden Heizstromes eine Temperatur von 1500° C aufrechterhalten.

Der ausgetragene Ruße wies eine AS-Zahl von 18, eine BET-Oberfläche von 145 m²/g und eine mittlere Dicke der Bereiche mit Graphitstruktur von 105 · 10⁻¹⁰ m auf. Der Gehalt des Rußes an Nickel betrug weniger als 10 ppm, an Eisen und Vanadium jeweils weniger als 50 ppm und an Chlorid weniger als 100 ppm.

**Patentansprüche**

1. Vorrichtung zur Erhöhung des Graphitierungsgrades von durch thermische Umwandlung von unter Normalbedingungen flüssigen oder gasförmigen Kohlenwasserstoffen gewonnenen Rußen durch Behandeln der Ruße in einer vertikal angeordneten Verweilzone bei Temperaturen von mindestens 1200° C im Gegenstrom zu Chlor oder Chlorwasserstoff und einem Inertgas, wobei die Vorrichtung aus einem vertikal angeordneten, isolierten Reaktionsrohr aus bei den Reaktionsbedingungen beständigem Material besteht, in das Elektroden zur direkten Erhitzung des nach unten bewegten Rußes eingebaut sind, gekennzeichnet durch ein Graphit-Rohr (1), einen zum Graphit-Rohr (1) konzentrisch angeordneten Stahlbehälter (10), eine in das Graphit-Rohr (1) hineinreichende und in vertikaler Richtung verstellbare Graphit-Elektrode (14) mit dem eigentlichen Graphit-Rohr (1) als Gegenelektrode, mehrere im mittleren Bereich des Graphit-Rohres (1) angebrachte Einmündungen (8) für Chlor- oder Chlorwasserstoff-Gas und ein mit dem unteren Ende des Graphit-Rohres (1) verbundenes, wassergekühltes Austragsorgan (3), in dessen Zuführungsrohr (2) die Zuführung (9) für Stickstoff als Inertgas einmündet.

2. Verwendung der Vorrichtung nach anspruch 1 zur Herstellung von Rußen, die für den Einbau in Depolarisationsmassen von Trockenbatterien geeignet sind.

**Claims**

1. Apparatus for improving the degree of graphitization of carbon black obtained by thermal conversion of hydrocarbons which are liquid or gaseous under normal conditions, the carbon black being subjected in a sojourn zone in vertical position at temperatures of at least 1200° C to countercurrent treatment with chlorine or hydrogen chloride and an inert gas, the apparatus being comprised of an isolated reaction tube in vertical position, the tube being made up of material resistant under the reaction conditions and having electrodes mounted therein for directly heating downwardly flowing carbon black, characterized by a graphite tube (1), a steel container (10) concentrically surrounding the graphite tube (1), a graphite electrode (14) reaching into the graphite tube (1) and displaceable in vertical direction therein, the graphite tube (1) being the actual counter-electrode, a plurality of chlorine or hydrogen chloride feed pipes (8) opening into the central portion of graphite tube (1), a water-cooled discharge means (3) which is connected to the lower end of the graphite tube (1), and a nitrogen feed pipe (9) opening into feed pipe (2) of discharge means (3).

2. Use of the apparatus as claimed in claim 1, for the manufacture of carbon black useful in depolarization masses of dry batteries.

**Revendications**

1. Appareillage pour augmenter le degré de graphitisation de noirs de fumée qui sont obtenus par conversion thermique d'hydrocarbures liquides ou gazeux en conditions normales, les noirs de fumée étant soumis dans une zone de séjour en position verticale à des températures d'au moins 1200°C à un traitement par du chlore ou du chlorure d'hydrogène et un gaz inerte s'écoulant à contrecourant, l'appareillage étant constitué par un tube de réaction isolé en position verticale consistant en un matériau résistant aux conditions réactionnelles et comportant des électrodes montées à l'intérier pour le chauffage direct du noir de fumée s'écoulant vers le bas, caractérisé par un tube en graphite (1), par un récipient en acier (10) disposé concentriquement autour du tube en graphite (1), par une électrode en graphite (14) déplaçable en direction verticale avec le tube en graphite (1) proprement dit comme contre-électrode, par plusieurs tubulures (8) d'amenée de chlore ou de chlorure d'hydrogène débouchant dans la partie centrale du tube en graphite (1) et par un dispositif (3) d'évacuation refroidi par l'eau, qui est raccordé à l'extrémité inférieure du tube en graphite (1) et dans le tube d'amenée (2) duquel débouche une tubulure (9) d'amenée d'azote comme gaz inerte.

2. Utilisation de l'appareillage selon la revendication 1, dans la fabrication de noirs de fumée utiles dans les masses de dépolarisation de piles sèches.